# EUROPÄISCHE PATENTSCHRIFT

(11) **EP 3 511 183 B1**
(45) Veröffentlichungstag und Bekanntmachung des Hinweises auf die Patenterteilung: **27.01.2021**
(21) Anmeldenummer: 18214446.9
(22) Anmeldetag: 20.12.2018
(51) Int. Cl.: B60J 7/12, B60J 7/14, B60J 7/20

(54) **VORRICHTUNG EINES CABRIOLET-FAHRZEUGS MIT EINEM VERLAGERBAREN ELEMENT**
DEVICE FOR A CONVERTIBLE VEHICLE WITH A MOVABLE ELEMENT
DISPOSITIF D'UN VÉHICULE CABRIOLET DOTÉ D'UN ÉLÉMENT DÉPLAÇABLE

(30) Priorität: 30.12.2017 DE 102017012149
(43) Veröffentlichungstag der Anmeldung: 17.07.2019
(73) Patentinhaber: Valmet Automotive Oy, 23500 Uusikaupunki (FI)
(72) Erfinder: Kreiling, Nils, 49080 Osnabrück (DE); Hollenbeck, Sven, 49492 Westerkappeln (DE); Cömlek, Erol, 32545 Bad Oeynhausen (DE)
(74) Vertreter: Kronthaler, Wolfgang N.K.

(56) Entgegenhaltungen:
- EP-A2- 0 930 187
- DE-A1-102005 051 445
- DE-A1-102007 024 790
- US-A- 5 029 932

## Beschreibung

Die Erfindung betrifft eine Vorrichtung eines Cabriolet-Fahrzeugs mit einem während einer Verdeckbewegung verlagerbaren Element nach der im Oberbegriff des Patentanspruches 1 näher definierten Art.

Aus der DE 10 2004 010 095 B3 ist eine Gestängeklappe eines Cabriolet-Fahrzeugs bekannt, die mittels eines Scharniers mit einem Hauptlenker verbunden ist. Es ist ein Federelement vorgesehen, welches die Gestängeklappe im Bereich einer Schwenkachse der Gestängeklappe gegen den Hauptlenker abstützt und mit Kraft beaufschlagt.

Bei einer derartigen Ausführung können sich Bauraumprobleme, insbesondere bei der Anordnung des Federelements, ergeben.

In der US 5 029 932 A ist eine starre, eine Heckscheibe bildende zentrale Platte mit daran seitlich angelenkten und sich in Richtung Fahrzeugbrüstung erstreckenden Seitenplatten gezeigt. Die Seitenplatten können während einer Verdeckbewegung relativ zu der zentralen Platte verschwenkt werden. Die Verschwenkung erfolgt über zwei senkrecht zueinander verlaufende Achsen, welche über ein Kegelradgetriebe miteinander verbunden sind, wobei eine eine der Achsen antreibende Federeinrichtung parallel versetzt zu dieser Achse angeordnet ist und über einen Hebel mit dieser Achse verbunden ist.

Weiterhin ist aus der EP 0 930 187 A2 ein Mechanismus zur Verschwenkbarkeit des Fanghakens eines Schlosses zur Verriegelung der Dachspitze eines Verdecks an einem Windschutzscheibenrahmen bekannt.

Es ist Aufgabe der vorliegenden Erfindung, eine Vorrichtung eines Cabriolet-Fahrzeugs zu schaffen, bei dem ein Element bauraumgünstig gegenüber einem weiteren Element verschwenkbar ist.

Diese Aufgabe wird mit einer Vorrichtung gemäß den Merkmalen des Patentanspruches 1 gelöst.

Es ist somit eine Vorrichtung eines Cabriolet-Fahrzeugs mit einem während einer Verdeckbewegung verlagerbaren Element vorgesehen, das mittels einer Gelenkeinrichtung an ein weiteres Element angebunden ist und gegenüber dem weiteren Element um eine Schwenkachse verschwenkbar ist, wobei eine Federeinrichtung vorgesehen ist, die das Element gegenüber dem weiteren Element zur Verschwenkung um die Schwenkachse mit Kraft beaufschlagt.

Erfindungsgemäß wird vorgeschlagen, dass die die Federeinrichtung mit ihrer Achse versetzt zu der Schwenkachse des verlagerbaren Elements angeordnet ist und die Gelenkeinrichtung einen ersten Hebel und einen zweiten Hebel aufweist, wobei das verlagerbare Element in einem ersten, die Schwenkachse bildenden Gelenkpunkt des ersten Hebels gegenüber dem weiteren Element gelagert ist und die Federeinrichtung im Bereich eines zweiten Gelenkpunkts des zweiten Hebels angeordnet ist, und wobei der erste Hebel und der zweite Hebel jeweils über eine erste Koppelstange und eine zweite Koppelstange gelenkig miteinander verbunden sind.

Gemäß der Erfindung ist die Federeinrichtung auf konstruktiv einfache Weise beabstandet zu der Schwenkachse des Elements angeordnet. Eine Übertragung einer von der Federeinrichtung verursachten Drehbewegung des zweiten Hebels um den zweiten Gelenkpunkt auf eine Drehbewegung des ersten Hebels um den ersten Gelenkpunkt bzw. die Schwenkachse erfolgt dabei durch die als 6-Gelenkeinrichtung oder als übergeschlossenes 4-Gelenk-Parallelogramm ausgeführte Gelenkeinrichtung.

Die erfindungsgemäße Vorrichtung ist auf einfache Weise bei Anwendungen einsetzbar, bei denen im Bereich der Schwenkachse kein ausreichender Platz für die Anordnung einer Federeinrichtung ist. Mit der erfindungsgemäßen Lösung ist während der Verschwenkung des Elements um die Schwenkachse eine mechanische Zwangsführung auch bei großen Schwenkwinkeln des Elements gegenüber dem weiteren Element erzielt. Zudem stellt die erfindungsgemäße Lösung eine lagetreue Kinematik mit günstigen Hebelarmen bereit.

Der zweite Hebel und die Federeinrichtung können im Bereich des zweiten Gelenkpunkts sowohl an dem verlagerbaren Element als auch an dem weiteren Element gelagert sein.

Bei einer vorteilhaften Ausführung der erfindungsgemäßen Vorrichtung ist das verlagerbare Element gegenüber dem weiteren Element um einen Winkel von größer 150°, insbesondere größer 180°, verschwenkbar. Somit kann die erfindungsgemäße Vorrichtung bei Anwendungsfällen eingesetzt werden, bei denen ein gewünschter Schwenkwinkel des verlagerbaren Elements gegenüber dem weiteren Element durch eine direkte Anbindung des verlagerbaren Elements an dem weiteren Element oder durch die Anbindung des verlagerbaren Elements an das weitere Element mittels eines Vorgeleges bzw. eines Zweischlags nicht umsetzbar ist.

Vorzugsweise beaufschlagt die Federeinrichtung das verlagerbare Element in Richtung einer Öffnungsstellung des verlagerbaren Elements mit Kraft. Alternativ hierzu kann es auch vorgesehen sein, dass die Federeinrichtung das verlagerbare Element in Richtung seiner Schließstellung beaufschlagt.

Um eine Bewegung des verlagerbaren Elements bei einer Verdecköffnungsbewegung oder Verdeckschließbewegung entgegen der Federkraft der Federeinrichtung von der Offenstellung in Richtung der Schließstellung oder von der Schließstellung in Richtung der Offenstellung auf konstruktiv einfache Weise umzusetzen, ist bei einer vorteilhaften Ausführung der Erfindung eine beispielsweise an dem ersten Hebel oder dem zweiten Hebel angebundene Rückstelleinrichtung vorgesehen.

Bei einer einfachen Ausführung der Erfindung ist die Rückstelleinrichtung als ein mit dem verlagerbaren Element und mit einem während einer Verlagerungsbewegung des Verdecks bewegten Bauteil verbundenes Seil, Band oder dergleichen ausgeführt.

Das erste Koppelelement und/oder das zweite Koppelelement kann bei einer einfach und kostengünstig umzusetzenden Ausführung der Erfindung drahtartig oder als Lenker ausgeführt sein.

Das verlagerbare Element kann gegenüber dem weiteren Element um eine im Wesentlichen in Fahrzeugquerrichtung oder im Wesentlichen in Fahrzeuglängsrichtung verlaufende Schwenkachse verlagerbar sein. Alternativ hierzu kann die Schwenkachse auch beliebig orientiert sein.

Bei einer bevorzugten Ausführung der Erfindung ist das weitere Element ein Mittelteil einer Dachspitzenverkleidung des Verdecks und das verlagerbare Element ein an dem Mittelteil angebundenes Seitenteil der Dachspitzenverkleidung. Hierbei kann auf einfache Weise erreicht werden, dass die Dachspitzenverkleidung einen bei einer Verdecköffnungsbewegung für Lenker eines Verdeckgestänges erforderlichen Bewegungsraum freigibt.

Alternativ hierzu kann es auch vorgesehen sein, dass das verlagerbare Element eine Gestängeklappe und das weitere Element eine weitere Gestängeklappe oder eine Fahrzeugkarosserie ist.

Grundsätzlich kann das verlagerbare Element jedes während einer Verdeckbewegung gegenüber einem weiteren Element verlagerbare Element eines Cabriolet-Fahrzeugs sein.

Weitere Vorteile und vorteilhafte Ausführungsformen der erfindungsgemäßen Vorrichtung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte dreidimensionale Darstellung eines Cabriolet-Fahrzeugs mit einem einen Fahrgastraum überspannenden Verdeck in einer geschlossenen Position, wobei das Verdeck mit einer Dachspitze an einem Windschutzscheibenrahmen angeordnet ist;
- Fig. 2: eine vereinfachte dreidimensionale Darstellungen einer dem Fahrgastraum zugewandten Dachspitzenverkleidung der Dachspitze in Alleinstellung, wobei die Dachspitzenverkleidung einen Mittelteil und zwei seitlich jeweils über eine Gelenkeinrichtung daran angebundene Seitenteile aufweist und die Seitenteile in einer Schließposition dargestellt sind, die die Seitenteile bei geschlossenem Verdeck einnehmen;
- Fig. 3: eine ausschnittsweise Darstellung der Dachspitzenverkleidung gemäß Fig. 2 mit Detail der Anbindung des Seitenteils an das Mittelteil; und
- Fig. 4: eine schematische Darstellung der Gelenkeinrichtung gemäß Fig. 2 und Fig. 3 mit den darin bezeichneten Gelenkpunkten.

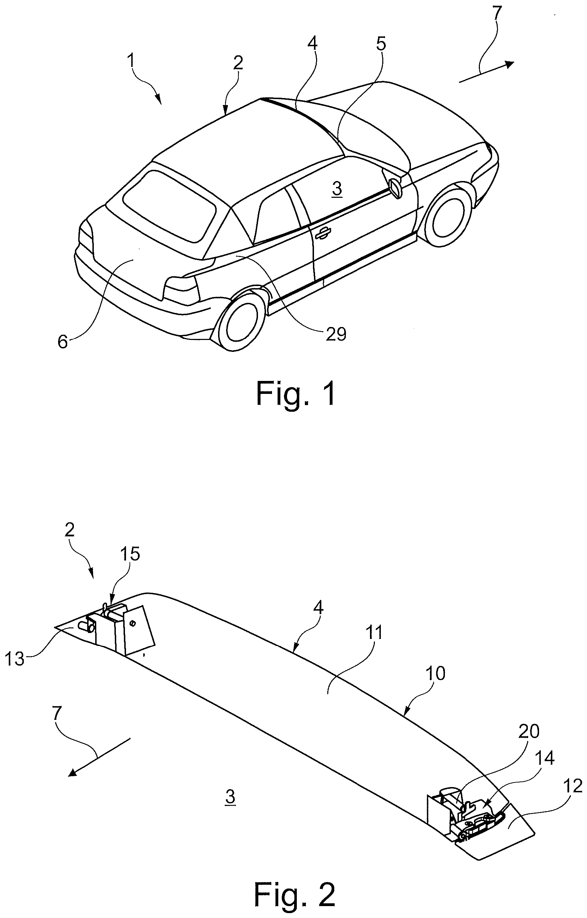

In Fig. 1 ist ein Cabriolet-Fahrzeug 1 mit einem in geschlossener Position dargestellten Verdeck 2 ersichtlich. Das Verdeck 2 ist mittels eines nicht näher ersichtlichen Verdeckgestänges aus der einen Fahrgastraum 3 überspannenden geschlossenen Position, in der eine Dachspitze 4 des Verdecks 2 an einem Windschutzscheibenrahmen 5 festgelegt ist, in eine den Fahrgastraum 3 freigebende offene Position verlagerbar, in der das Verdeck 3 in einem von einem Verdeckkastendeckel 6 bzw. Heckdeckel abdeckbaren Verdeckablageraum angeordnet ist.

Die Fahrzeugfrontrichtung ist mit dem Bezugszeichen 7 bezeichnet.

Die Dachspitze 4 weist eine in Fig. 2 bis Fig. 4 näher ersichtliche und als Dachspitzenverkleidung 10 ausgeführte Vorrichtung auf, die in geschlossener Verdeckposition auf einer dem Fahrgastraum 3 zugewandten Seite des Verdecks 2 angeordnet ist. Die Dachspitzenverkleidung 10 weist ein Mittelteil 11 und in Fahrzeugquerrichtung jeweils daran grenzende Klappen bzw. Seitenteile 12, 13 auf, die jeweils mittels einer Gelenkeinrichtung 14 bzw. 15 an das Mittelteil 11 angebunden sind.

Die einer linken Fahrzeugseite zugeordnete Gelenkeinrichtung 14 ist im Wesentlichen spiegelbildlich zu der einer rechten Fahrzeugseite zugeordneten Gelenkeinrichtung 15 ausgeführt, so dass im Folgenden die Gelenkeinrichtung 14 stellvertretend für die Gelenkeinrichtung 15 beschrieben wird.

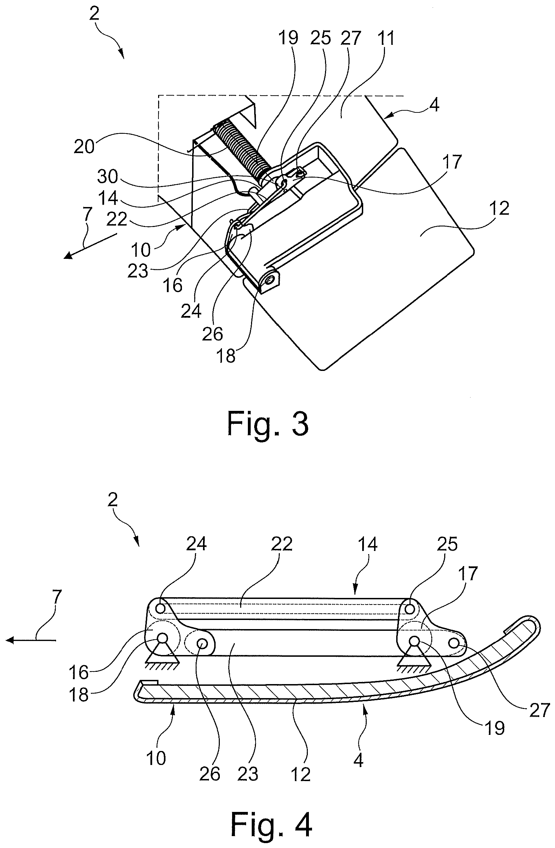

Die in Fig. 4 schematisch ersichtliche und als 6-Gelenk ausgeführte Gelenkeinrichtung 14 weist einen ersten Hebel 16 und einen zweiten Hebel 17 auf. Der erste Hebel 16 ist in einem ersten Gelenkpunkt 18, der eine im Wesentlichen in Fahrzeugquerrichtung orientierte Schwenkachse des Seitenteils 12 bildet, gegenüber dem Mittelteil 11 schwenkbar gelagert.

In einem zweiten Gelenkpunkt 19 des zweiten Hebels 17 ist der zweite Hebel 17 an das Mittelteil 11 angebunden. Weiterhin ist eine als Drehfeder 20 bzw. Schenkelfeder ausgeführte Federeinrichtung vorgesehen, die im Bereich des zweiten Gelenkpunkts 19 an dem Mittelteil 11 angeordnet ist und das Seitenteil 12 mit einer in Richtung einer Öffnungsposition mit Kraft beaufschlagt. Wie beispielsweise in Fig. 3 näher ersichtlich ist, ist im Bereich der Schwenkachse 18 kein ausreichend großer Bauraum für die Federeinrichtung 20 vorhanden, so dass durch die Anordnung der Federeinrichtung 20 in Fahrzeuglängsrichtung beabstandet zu der Schwenkachse 18 auf einfache Weise ein federkraftbelasteter Verlagerungsmechanismus geschaffen wird.

In der Öffnungsposition ist das Seitenteil 12 vorliegend um etwa 180° im Uhrzeigersinn gegenüber der in Fig. 3 gezeigten Schließposition verschwenkt und somit in Fahrzeugfrontrichtung 7 gegenüber dem Mittelteil 11 nach vorne verlagert.

Die Gelenkeinrichtung 14 weist weiterhin zwei hier als Drahtelemente 22, 23 ausgeführte Koppelelemente auf, wobei ein erstes Drahtelement 22 in einem dritten Gelenkpunkt 24 an dem ersten Hebel 16 und in einem vierten Gelenkpunkt 25 an dem zweiten Hebel 17 und ein zweites Drahtelement 23 in einem fünften Gelenkpunkt 26 an dem ersten Hebel 16 und in einem sechsten Gelenkpunkt 27 an dem zweiten Hebel 17 angebunden ist. Die Drahtelemente 22, 23 sind dabei im Wesentlichen parallel zueinander angeordnet.

Die Gelenkeinrichtung 14 zur Bewegungsübertragung der Federrotation auf die Klappe bzw. das Seitenteil 12 stellt somit eine Art Doppel-Parallelkurbelgetriebe dar, welches als 6-Gelenk bzw. übergeschlossenes 4-Gelenk-Parallelogramm realisiert sein kann.

Bei einer Verdecköffnungsbewegung wird das Seitenteil 12 durch die von der Federeinrichtung 20 in vollem Umfang auf die Schwenkachse 18 wirkende Federkraft der Federeinrichtung 20 von ihrer Schließposition um den ersten Gelenkpunkt 18 in Fahrzeugfrontrichtung 7 nach vorne verschwenkt, so dass ein während der Verdeckbewegung erforderlicher Bewegungsraum für Elemente des Verdeckgestänges freigegeben wird.

Um das Seitenteil 12 bei einer Verdeckschließbewegung entgegen der Federkraft der Drehfeder 20 von der Offenposition zurück in Richtung der Schließposition zu bewegen, ist eine nicht näher ersichtliche und einerseits an das Seitenteil 12 und andererseits an ein während einer Verdeckbewegung bewegtes Element des Verdecks oder an eine Fahrzeugkarosserie 29 angebundene Rückstelleinrichtung 30 vorgesehen, die insbesondere als Seil oder Band ausgeführt ist. Das Seil 30 wirkt beispielsweise mit dem zweiten Hebel 17 in einem siebten Gelenkpunkt zusammen.

Die Gelenkeinrichtung 14 arbeitet im Wesentlichen spielfrei, ist kostengünstig und robust ausführbar sowie dem jeweils vorhandenen Bauraum entsprechend flexibel anpassbar.

## Patentansprüche

1. Vorrichtung (10) eines Cabriolet-Fahrzeugs (1) mit einem während einer Verdeckbewegung verlagerbaren Element (12, 13), das mittels einer Gelenkeinrichtung (14, 15) an ein weiteres Element (11) angebunden ist und gegenüber dem weiteren Element (11) um eine Schwenkachse (18) verschwenkbar ist, wobei eine Federeinrichtung (20) vorgesehen ist, die das verlagerbare Element (12, 13) gegenüber dem weiteren Element (11) zur Verschwenkung um die Schwenkachse (18) mit Kraft beaufschlagt, wobei die Federeinrichtung (20) mit ihrer Achse versetzt zu der Schwenkachse (18) des verlagerbaren Elements (12, 13) angeordnet ist, **dadurch gekennzeichnet, dass** die Gelenkeinrichtung (14, 15) als 6-Gelenkeinrichtung oder als übergeschlossenes 4-Gelenk-Parallelogramm ausgeführt ist und einen ersten Hebel (16) und einen zweiten Hebel (17) aufweist, welche jeweils über ein erstes Koppelelement (22) und ein zweites Koppelelement (23) gelenkig miteinander verbunden sind, wobei das verlagerbare Element (12, 13) in einem ersten, die Schwenkachse bildenden Gelenkpunkt (18) des ersten Hebels (16) gegenüber dem weiteren Element (11) gelagert ist und die Federeinrichtung (20) im Bereich eines zweiten Gelenkpunkts (19) des zweiten Hebels (17) angeordnet ist und durch die Gelenkeinrichtung (14, 15) eine Übertragung einer von der Federeinrichtung (20) verursachten Drehbewegung des zweiten Hebels (17)um den zweiten Gelenkpunkt (19) auf eine Drehbewegung des ersten Hebels (16) um den ersten Gelenkpunkt (18) erfolgt.

2. Vorrichtung nach Anspruch 1,
**dadurch gekennzeichnet, dass** das verlagerbare Element (12, 13) gegenüber dem weiteren Element (11) um einen Winkel von größer 150° verschwenkbar ist.

3. Vorrichtung nach einem der Ansprüche 1 oder 2,
**dadurch gekennzeichnet, dass** die Federeinrichtung (20) das verlagerbare Element (12, 13) in Richtung einer Öffnungsstellung des Elements (12, 13) mit Kraft beaufschlagt.

4. Vorrichtung nach einem der Ansprüche 1 bis 3,
**dadurch gekennzeichnet, dass** eine Rückstelleinrichtung (30) vorgesehen ist, die zur Bewegung des verlagerbaren Elements (12, 13) bei einer Verdecköffnungs- oder -schließbewegung entgegen der Federkraft der Federeinrichtung (20) in Richtung der Schließstellung oder Offenstellung des verlagerbaren Elements (12 ,13) ausgeführt ist.

5. Vorrichtung nach Anspruch 4,
**dadurch gekennzeichnet, dass** die Rückstelleinrichtung (30) als ein mit dem verlagerbaren Element (12, 13) und mit einem während einer Verlagerungsbewegung des Verdecks (2) bewegten Bauteil verbundenes Seil ausgeführt ist.

6. Vorrichtung nach einem der Ansprüche 1 bis 5,
**dadurch gekennzeichnet, dass** der erste Hebel (16) und/oder der zweite Hebel (17) im Wesentlichen L-förmig ausgeführt ist.

7. Vorrichtung nach einem der Ansprüche 1 bis 6,
**dadurch gekennzeichnet, dass** das erste Koppelelement (22) und/oder das zweite Koppelelement (23) drahtartig oder als Lenker ausgeführt ist.

8. Vorrichtung nach einem der Ansprüche 1 bis 7,
**dadurch gekennzeichnet, dass** das verlagerbare Element (12, 13) gegenüber dem weiteren Element (11) um eine im Wesentlichen in Fahrzeugquerrichtung oder im Wesentlichen in Fahrzeuglängsrichtung verlaufende Schwenkachse (18) verlagerbar ist.

9. Vorrichtung nach einem der Ansprüche 1 bis 8,
**dadurch gekennzeichnet, dass** das weitere Element (11) ein Mittelteil einer Dachspitzenverkleidung (10) des Verdecks (2) und das verlagerbare Element (12, 13) ein an dem Mittelteil (22) angebundenes Seitenteil der Dachspitzenverkleidung (10) ist.

10. Vorrichtung nach einem der Ansprüche 1 bis 8,
**dadurch gekennzeichnet, dass** das verlagerbare Element eine Gestängeklappe und das weitere Element eine weitere Gestängeklappe oder eine Fahrzeugkarosserie ist.

## Claims

1. A device (10) of a convertible vehicle (1) with an element (12, 13) which is movable during a hood movement, is connected to a further element (11) by means of an articulation means (14, 15) and is pivotable relative to the further element (11) about a pivot axis (18), wherein a spring means (20) is provided which applies force to the movable element (12, 13) relative to the further element (11) for pivoting about the pivot axis (18),
wherein the spring means (20) is arranged with its axis offset with respect to the pivot axis (18) of the movable element (12, 13), **characterised in that** the articulation means (14, 15) is designed as a 6-joint linkage or as an overconstrained 4-joint parallelogram and comprises a first lever (16) and a second lever (17) which are each connected to one another in an articulated manner via a first coupling element (22) and a second coupling element (23), wherein the movable element (12, 13) is mounted relative to the further element (11) in a first point of articulation (18) of the first lever (16) forming the pivot axis, and the spring means (20) is arranged in the region of a second point of articulation (19) of the second lever (17), and a transmission of a rotational movement of the second lever (17) about the second point of articulation (19) caused by the spring means (20) to a rotational movement of the first lever (16) about the first point of articulation (18) is effected by the articulation means (14, 15).

2. The device according to claim 1,
**characterised in that** the movable element (12, 13) is pivotable through an angle of more than 150° relative to the further element (11).

3. The device according to any one of claims 1 or 2,
**characterised in that** the spring means (20) applies force to the movable element (12, 13) in the direction of an open position of the element (12, 13).

4. The device according to any one of claims 1 to 3,
**characterised in that** a return means (30) is provided which is designed to move the movable element (12, 13) during a hood opening or closing movement against the spring force of the spring means (20) in the direction of the closed position or open position of the movable element (12, 13).

5. The device according to claim 4,
**characterised in that** the return means (30) is designed as a cable connected to the movable element (12, 13) and to a component moved during a displacement movement of the hood (2).

6. The device according to any one of claims 1 to 5,
**characterised in that** the first lever (16) and/or the second lever (17) is substantially L-shaped.

7. The device according to any one of claims 1 to 6,
**characterised in that** the first coupling element (22) and/or the second coupling element (23) is designed in the form of a wire or a link.

8. The device according to any one of claims 1 to 7,
**characterised in that** the movable element (12, 13) is movable relative to the further element (11) about a pivot axis (18) extending substantially in the transverse direction of the vehicle or substantially in the longitudinal vehicle direction.

9. The device according to any one of claims 1 to 8,
**characterised in that** the further element (11) is a central part of a roof header covering (10) of the hood (2) and the movable element (12, 13) is a side part of the roof header covering (10) connected to the central part (22).

10. The device according to any one of claims 1 to 8,
**characterised in that** the movable element is a linkage lid and the further element is a further linkage lid or a vehicle body.

## Revendications

1. Dispositif (10) d'un véhicule cabriolet (1) avec un élément (12, 13) déplaçable lors d'un mouvement de la capote, ledit élément (12, 13) étant relié à un autre élément (11) par un moyen d'articulation (14, 15) et pouvant pivoter par rapport à l'autre élément (11) autour d'un axe de pivotement (18), un moyen de ressort (20) étant prévu qui exerce une force sur l'élément déplaçable (12, 13) par rapport à l'autre élément (11) pour le faire pivoter autour de l'axe de pivotement (18),
le moyen de ressort (20) étant disposé avec son axe décalé par rapport à l'axe de pivotement (18) de l'élément déplaçable (12, 13), **caractérisé en ce que** le moyen d'articulation (14, 15) est conçu comme un dispositif à 6 articulations ou comme un parallélogramme à 4 articulations fortement retreint et comprend un premier levier (16) et un deuxième levier (17) qui sont chacun reliés entre eux de manière articulée par un premier élément d'accouplement (22) et un deuxième élément d'accouplement (23), l'élément déplaçable (12, 13) étant monté par rapport à l'autre élément (11) dans un premier point d'articulation (18) du premier levier (16) formant l'axe de pivotement, et le moyen de ressort (20) est disposé dans la zone d'un deuxième point d'articulation (19) du deuxième levier (17), et une transmission d'un mouvement de rotation du deuxième levier (17) autour du deuxième point d'articulation (19), provoqué par le moyen de ressort (20), à un mouvement de rotation du premier levier (16) autour du premier point d'articulation (18) est effectuée par le moyen d'articulation (14, 15).

2. Dispositif selon la revendication 1,
**caractérisé en ce que** l'élément déplaçable (12, 13) peut pivoter par rapport à l'autre élément (11) d'un angle supérieur à 150°.

3. Dispositif selon l'une quelconque des revendications 1 ou 2,
**caractérisé en ce que** le moyen de ressort (20) applique une force sur l'élément déplaçable (12, 13) dans la direction d'une position ouverte de l'élément (12, 13).

4. Dispositif selon l'une quelconque des revendications 1 à 3,
**caractérisé en ce que** l'on prévoit un moyen de rappel (30) qui est conçu pour déplacer l'élément déplaçable (12, 13) pendant un mouvement d'ouverture ou de fermeture de la capote contre la force de ressort du moyen de ressort (20) dans la direction de la position fermée ou de la position ouverte de l'élément déplaçable (12, 13).

5. Dispositif selon la revendication 4,
**caractérisé en ce que** le moyen de rappel (30) est conçu comme un câble relié à l'élément déplaçable (12, 13) et à un composant qui est déplacé lors d'un mouvement de déplacement de la capote (2).

6. Dispositif selon l'une quelconque des revendications 1 à 5,
**caractérisé en ce que** le premier levier (16) et/ou le deuxième levier (17) est sensiblement en forme de L.

7. Dispositif selon l'une quelconque des revendications 1 à 6,
**caractérisé en ce que** le premier élément d'accouplement (22) et/ou le deuxième élément d'accouplement (23) est conçu sous forme de fil ou de bras.

8. Dispositif selon l'une quelconque des revendications 1 à 7,
**caractérisé en ce que** l'élément déplaçable (12, 13) est déplaçable par rapport à l'autre élément (11) autour d'un axe de pivotement (18) s'étendant sensiblement dans la direction transversale du véhicule ou sensiblement dans la direction longitudinale du véhicule.

9. Dispositif selon l'une quelconque des revendications 1 à 8,
**caractérisé en ce que** l'autre élément (11) est une partie centrale d'un revêtement de pointe de toit (10) de la capote (2) et l'élément déplaçable (12, 13) est une partie latérale du revêtement de pointe de toit (10) reliée à la partie centrale (22).

10. Dispositif selon l'une quelconque des revendications 1 à 8,
**caractérisé en ce que** l'élément déplaçable est un couvercle articulé de tringlerie et l'autre élément est un autre couvercle articulé de tringlerie ou une carrosserie de véhicule.
